# EUROPÄISCHE PATENTSCHRIFT

(11) **EP 3 445 719 B1**
(45) Veröffentlichungstag und Bekanntmachung des Hinweises auf die Patenterteilung: **20.04.2022**
(21) Anmeldenummer: 17721562.1
(22) Anmeldetag: 21.04.2017
(51) Int. Cl.: C02F 1/00, C02F 1/28, C02F 1/42, C02F 1/44, C02F 101/20, C02F 101/30, C02F 101/34

(54) **WASSERAUFBEREITUNGSVORRICHTUNG**
WATER TREATMENT APPARATUS
DISPOSITIF DE TRAITEMENT DE L'EAU

(30) Priorität: 22.04.2016 DE 102016107483
(43) Veröffentlichungstag der Anmeldung: 27.02.2019
(73) Patentinhaber: Pall Corporation, Port Washington, NY 11050 (US)
(72) Erfinder: OECHSLE, Dietmar, 73529 Schwäbisch Gmünd Deutschland (DE); DAHLBERG, Christian, 72658 Bempflingen (DE); KEY, Steffen, 71106 Magstadt (DE)
(74) Vertreter: Hoeger, Stellrecht & Partner Patentanwälte mbB
(86) Internationale Anmeldenummer: PCT/EP2017/059553
(87) Internationale Veröffentlichungsnummer: WO 2017/182653

(56) Entgegenhaltungen:
- EP-A1- 2 733 120
- EP-A1- 2 754 642
- WO-A2-03/089104
- JP-A- 2012 030 204

## Beschreibung

Die Erfindung betrifft eine Wasseraufbereitungsvorrichtung nach dem Oberbegriff von Anspruch 1.

Es sind bereits Wasseraufbereitungsvorrichtungen vorgeschlagen worden, welche zur Aufbereitung von Wasser Filtereinheiten und Adsorptionseinheiten nutzen, um Schadstoffe aus Wasser zu entfernen. Während eine Aufbereitungseffizienz für die meisten im Wasser enthaltenen Schadstoffe ausreichend ist, ist die Aufbereitungseffizienz solcher Wasseraufbereitungsvorrichtungen in Bezug auf Mikroschadstoffe stark verringert, da diese zum einen in einer wesentlich geringeren Konzentration auftreten und zum andern zumindest im Wesentlichen kleinere Molekulargewichte aufweisen. Zwar liegen die Konzentrationen der einzelnen Mikroschadstoffe üblicherweise unterhalb der kritischen Verträglichkeitsgrenzwerte für Umwelt und Menschen, jedoch wird hierbei ein Summenparameter der verschiedenen Mikroschadstoffe nicht berücksichtigt. Daher ist es von großem Interesse, diese mit gesteigerter Effizienz aus Wasser zu entfernen.

Die EP 2 754 642 A1 offenbart eine Wasserreinigungskartusche, welche zwischen einem Rohwasserbehälter und einem Behälter für gereinigtes Wasser angeordnet ist. Die Wasserreinigungskartusche umfasst einen Behälter zur Aufnahme eines Adsorbers und eine Hohlfasermembran. Der Behälter umfasst einen Adsorberbereich, in welchem Adsorber angeordnet ist und welcher ein einen Wassersammelbereich aufweist, und einen Hohlfasermembranbereich, in welchem die Hohlfasermembran angeordnet ist und welche an einer Abströmseite des Adsorberbereichs angeordnet ist.

Aus der EP 2 733 120 A1 ist eine Wasserreinigungskartusche bekannt, welche einen Behälter mit einer ersten Öffnung und einer zweiten Öffnung aufweist. Die Wasserreinigungskartusche umfasst ferner ein Filtermaterial, welches einen Adsorber und eine Hohlfasermembran umfasst.

Die WO 03/089104 A2 offenbart eine verkapselte Filterkartusche, welche eine Filtereinrichtung mit einem Kohlenstoffblockelement und einem mikroporösen Filterelement umfasst.

Aus der JP 2012 030 204 A ist eine Kartusche für Wasserreiniger bekannt, welche Hohlfaserbündel umfasst, die in einem Schutznetz-Beutel angeordnet sind.

Die Aufgabe der Erfindung besteht insbesondere darin, eine gattungsgemäße Vorrichtung mit verbesserten Eigenschaften hinsichtlich einer Effizienz, insbesondere einer Aufbereitungseffizienz, bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Wasseraufbereitungsvorrichtung, welche zu einer Entfernung von Mikroschadstoffen, insbesondere Arzneimitteln, aus Wasser vorgesehen ist, mit zumindest einer Filtereinheit, welche in zumindest einem Betriebszustand wenigstens zu einer Filterung des Wassers vorgesehen ist und welche zumindest ein röhrenförmiges Filterelement mit zumindest zwei Endabschnitten aufweist, und mit zumindest einer Adsorptionseinheit, welche die Mikroschadstoffe in zumindest einem Betriebszustand zumindest teilweise adsorbiert.

Die Endabschnitte schließen in einem montierten Zustand einen Innenwinkel von 0° bis 90° ein. Hierdurch kann eine Effizienz, insbesondere eine Aufbereitungseffizienz, verbessert werden. Insbesondere kann eine Durchflussrate bei einer Querstrom-Filtration verbessert werden.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Wasseraufbereitungsvorrichtung" soll insbesondere eine Vorrichtung verstanden werden, welche dazu vorgesehen ist, Wasser, insbesondere Trinkwasser, aufzubereiten, zu läutern, zu klären, zu reinigen und/oder zu säubern und vorteilhaft Mikroschadstoffe zu entfernen, insbesondere indem diese aus dem Wasser gefiltert und/oder sorbiert, insbesondere absorbiert und/oder besonders bevorzugt adsorbiert werden. Die Wasseraufbereitungsvorrichtung ist insbesondere zumindest ein Teil, insbesondere eine Unterbaugruppe einer Wasseraufbereitungskartusche, eines Systems zur Wasseraufbereitung und/oder einer Wasseraufbereitungsanlage, wie beispielsweise einer Kläranlage. Insbesondere kann die Wasseraufbereitungsvorrichtung die Wasseraufbereitungskartusche, das System zur Wasseraufbereitung und/oder die Wasseraufbereitungsanlage vollständig umfassen. Insbesondere ist die Wasseraufbereitungsvorrichtung, vorteilhaft direkt, an einen Hauswasseranschluss, bevorzugt an einen Wasserhahn, anschließbar und ist diesem insbesondere strömungstechnisch vorgeschaltet. Unter einem "Betriebszustand" der Wasseraufbereitungsvorrichtung soll insbesondere ein Zustand verstanden werden, in welchem die Wasseraufbereitungsvorrichtung vollständig von Wasser durchflossen ist. Unter "Mikroschadstoffen" sollen insbesondere Schadstoffe wie beispielsweise Industriechemikalien, Arzneimittel, insbesondere Carbamazepin, Sulfamethoxazol, Diclofenac und/oder Ethinylestradiol, Schwermetalle und/oder Pestizide verstanden werden, welche im Wasser, insbesondere gelöst, in einer geringen Konzentration auftreten, und zwar insbesondere in einer Konzentration von weniger als 10000 ppm, bevorzugt von weniger als 1000 ppm, weiter bevorzugt von weniger als 100 ppm und besonders bevorzugt von weniger als 10 ppm. Insbesondere weisen die Mikroschadstoffe ein Molekulargewicht von weniger als 100 kDa, bevorzugt weniger als 10 kDa, weiter bevorzugt weniger als 1 kDa und besonders bevorzugt weniger als 0,1 kDa auf.

Unter einer "Adsorptionseinheit" soll insbesondere eine Einheit mit zumindest einem Adsorptionselement verstanden werden, welches dazu vorgesehen ist, insbesondere mittels zumindest eines Adsorptionsmittels, vorzugsweise mehrerer Adsorptionsmittel, Mikroschadstoff, insbesondere gelösten Mikroschadstoff, zumindest im Wesentlichen fest zu binden und/oder zu adsorbieren, und zwar insbesondere an einer Oberfläche, vorzugsweise in einem Hohlraum und besonders bevorzugt in einer Pore des Adsorptionsmittels. Insbesondere ist der zugrunde liegende Adsorptionsmechanismus zur Bindung der Mikroschadstoffe von einer kovalenten Bindung verschieden. Vorteilhaft ist das Adsorptionselement dazu vorgesehen, die Mikroschadstoffe mittels Coulomb- und/oder van der Waals-Wechselwirkung zumindest im Wesentlichen fest zu binden. Darunter, "einen Mikroschadstoff zumindest im Wesentlichen fest zu binden", soll insbesondere verstanden werden, dass ein adsorbierter Mikroschadstoff bei einem Auswaschungstest mittels Durchspülen mit Wasser innerhalb eines Zeitraums von zumindest einer Stunde, vorteilhaft zumindest zwei Stunden und bevorzugt zumindest vier Stunden zu maximal einem Prozent, vorteilhaft maximal einem halben Prozent und bevorzugt maximal einem Promille einer gebundenen Stoffmenge ausgespült wird. Die Adsorptionseinheit ist insbesondere zumindest teilweise chemisch regenerierbar. Unter "chemisch regenerierbar" soll insbesondere verstanden werden, dass das zumindest eine Adsorptionsmittel durch eine chemische Reaktion regeneriert werden kann. Insbesondere ist das Adsorptionsmittel mittels einer Säure und/oder einer Lauge, vorzugsweise einer Natronlauge, chemisch regenerierbar. Ferner ist das Adsorptionsmittel insbesondere mittels einer Salzlösung, vorzugsweise einer Natriumchlorid-Lösung, chemisch regenerierbar. Alternativ oder zusätzlich ist das Adsorptionsmittel insbesondere durch Beaufschlagung mit Energie, wie beispielsweise in Form von Wärme und/oder elektromagnetischer Strahlung, insbesondere durch Licht, vorzugsweise UV-Licht, regenerierbar. Die Adsorptionseinheit ist insbesondere als ein vorteilhaft wasserdurchlässiger fester Block oder als eine Schüttung ausgebildet, welcher/welche zumindest teilweise von zumindest einem Adsorptionselement ausgebildet ist.

Vorzugsweise weist die Adsorptionseinheit zumindest ein spezifisches und/oder unspezifisches Adsorptionselement auf. Unter einem "unspezifischen Adsorptionselement" soll insbesondere ein Adsorptionselement verstanden werden, welches zumindest ein unspezifisches Adsorptionsmittel aufweist, das dazu vorgesehen ist, mehrere verschiedene Mikroschadstoffe chemisch unspezifisch, insbesondere im gleichen Maße und vorzugsweise unabhängig von funktionellen Gruppen der Mikroschadstoffe und/oder einer Ladung der Mikroschadstoffe zu adsorbieren. Das unspezifische Adsorptionsmittel ist insbesondere dazu vorgesehen, verschiedene Mikroschadstoffe sterisch abhängig zu adsorbieren. Vorteilhaft kann das unspezifische Adsorptionselement mehrere unspezifische Adsorptionsmittel aufweisen. Unter einem "spezifischen Adsorptionselement" soll insbesondere ein Adsorptionselement verstanden werden, welches zumindest ein spezifisches Adsorptionsmittel aufweist, das dazu vorgesehen ist, bestimmte Mikroschadstoffe chemisch oder physikalisch spezifisch, insbesondere in unterschiedlichem Maße und vorzugsweise abhängig von funktionellen Gruppen der Mikroschadstoffe und/oder einer Ladung der Mikroschadstoffe zu adsorbieren. Das spezifische Adsorptionsmittel ist insbesondere dazu vorgesehen, bestimmte Mikroschadstoffe sterisch unabhängig zu adsorbieren. Vorteilhaft kann das spezifische Adsorptionselement mehrere spezifische Adsorptionsmittel aufweisen.

Alternativ oder zusätzlich kann die Adsorptionseinheit zumindest teilweise einstückig mit einem weiteren Körper, wie beispielsweise der Filtereinheit, ausgebildet sein, und zwar vorteilhaft als Imprägnierung und/oder Beschichtung. Unter "zumindest teilweise einstückig ausgebildet" soll in diesem Zusammenhang insbesondere verstanden werden, dass zumindest ein Bauteil zumindest eines Objekts einstückig mit zumindest einem Bauteil zumindest eines weiteren Objekts ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess. Vorteilhaft soll unter "einstückig" auch einteilig verstanden werden. Unter "einteilig" soll insbesondere in einem Stück geformt verstanden werden, wie beispielsweise durch eine Herstellung aus einem Guss und/oder durch eine Herstellung in einem Ein- oder Mehrkomponentenspritzverfahren, vorteilhaft aus einem einzelnen Rohling und besonders bevorzugt in einem Spinnverfahren, insbesondere einem Nassspinnverfahren, wie beispielsweise Reaktivspinnen, bei welchem insbesondere in einem Phaseninversionsprozess die Filtereinheit mit integriertem Adsorptionsmittel hergestellt wird, hergestellt.

Unter einer "Filtereinheit" soll insbesondere eine Membranfiltereinheit verstanden werden, die dazu vorgesehen ist, Wasser von Mikroschadstoffen durch Zurückhaltung der Mikroschadstoffe an Poren der Filtermembran zu reinigen. Das Filterelement der Filtereinheit ist insbesondere als Filtermembran und vorteilhaft als eine Hohlfaserfiltermembran ausgebildet, bei welcher eine Wandung des Filterelements die Membran bildet und einen Hohlkanal definiert. Grundsätzlich kann das Filterelement eine Reinigung von in dem Hohlkanal geführtem Wasser bei einem Durchtritt aus dem geschlossenen Hohlkanal durch das Filterelement in einen Außenraum vornehmen, so dass aus dem Hohlkanal austretendes Wasser gereinigt wird, oder bevorzugt kann das Filterelement eine Reinigung von aus dem Außenraum in den Hohlkanal eintretendem Wasser vornehmen, welches dann im gereinigten Zustand in dem Hohlkanal geführt wird. Die Filtereinheit weist insbesondere zumindest ein Filterelement, vorzugsweise wenigstens 5 Filterelemente, bevorzugt wenigstens 10 und besonders bevorzugt mindestens 20 Filterelemente auf.

Unter einem "Endabschnitt" eines Objekts soll insbesondere ein Abschnitt verstanden werden, welcher sich entlang einer Erstreckung, insbesondere einer Haupterstreckung, des Objekts bis zu einem Ende des Objekts erstreckt. Der Endabschnitt erstreckt sich entlang des Filterelements insbesondere über maximal 10 cm, vorzugsweise über maximal 5 cm und besonders bevorzugt über maximal 1 cm.

Unter einem "Innenwinkel" soll insbesondere ein Winkel verstanden werden, welcher von zwei Vektoren eingeschlossen wird, welche parallel zu je einem Endabschnitt verlaufen und welche in Richtung eines eine Öffnung aufweisenden Endes des jeweiligen Endabschnitts zeigen.

Insbesondere ist das Filterelement im montierten Zustand zumindest abschnittsweise gebogen und vorzugsweise schlingenförmig ausgebildet. Um eine besonders effiziente Anordnung des Filterelements zu erreichen und vorteilhaft einen Durchflussstrom zu erhöhen, ist das Filterelement im montierten Zustand im Wesentlichen u-förmig gebogen. Die zwei Endabschnitte des Filterelements sind im montierten Zustand insbesondere zumindest im Wesentlichen parallel, vorteilhaft antiparallel zueinander angeordnet. Das Filterelement weist vorzugsweise eine Haupterstreckungsebene auf, welche in dem montierten Zustand das Filterelement über die gesamte Erstreckung des Filterelements schneidet. Unter einer "Haupterstreckungsebene" eines Objekts soll insbesondere eine Ebene verstanden werden, welche parallel zu einer größten Seitenfläche eines kleinsten gedachten Quaders ist, welcher das Objekt gerade noch vollständig umschließt und durch den Mittelpunkt des Quaders verläuft. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung insbesondere eine Abweichung kleiner als 8°, vorteilhaft kleiner als 5° und besonders vorteilhaft kleiner als 2° aufweist.

Es wird ferner vorgeschlagen, dass die Wasseraufbereitungsvorrichtung ein Halteelement aufweist, welches die Endabschnitte im montierten Zustand fest zueinander anordnet. Die zwei Endabschnitte des Filterelements sind im montierten Zustand insbesondere fest, vorzugsweise zumindest stoffschlüssig, mit dem Halteelement verbunden. Das Halteelement ist vorteilhaft von einem Bindemittel gebildet, wie beispielsweise einem Kleber, bevorzugt einem Harz, und besonders bevorzugt einem Epoxidharz. Das Filterelement, insbesondere die Endabschnitte des Filterelements, ist/sind, insbesondere zumindest teilweise, derart verödet, dass ein Eindringen des Bindemittels in das Filterelement, insbesondere in die Wandung des Filterelements, insbesondere an den Endabschnitten, vermieden wird. Bei einer Montage werden die Endabschnitte insbesondere in dem noch flüssigen Bindemittel angeordnet. Vorteilhaft wird das Bindemittel ausgehärtet. Ferner wird das ausgehärtete Bindemittel insbesondere derart angeschliffen, dass Öffnungen der Endabschnitte des Filterelements freiliegen. Das Halteelement ist vorzugsweise zylinderförmig, rohrförmig und/oder scheibenförmig ausgebildet. Hierdurch kann auf einfache Art und Weise das Filterelement fest angeordnet werden.

Die Filtereinheit weist zumindest ein weiteres Filterelement auf, welches zumindest im Wesentlichen äquivalent zu dem Filterelement ausgebildet ist und welches das Filterelement zumindest teilweise umgreift. Darunter, dass "zwei Objekte zumindest im Wesentlichen äquivalent" sind, soll insbesondere verstanden werden, dass diese insbesondere im montierten Zustand weitgehend gleich ausgebildet sind, vorzugsweise gleiche Formgebung und insbesondere Orientierung aufweisen und sich vorzugsweise lediglich durch Produktionstoleranzen und/oder Fertigungsfehler voneinander unterscheiden. Insbesondere ist das weitere Filterelement auf ähnliche Weise geschlungen wie das Filterelement. Zusätzlich können sich die äquivalent ausgebildeten Filterelemente insbesondere durch eine Länge voneinander unterscheiden. Das Filterelement und das weitere Filterelement, insbesondere die Endabschnitte des Filterelements und die Endabschnitte des weiteren Filterelements, sind zueinander zumindest teilweise zumindest im Wesentlichen parallel oder vorzugsweise antiparallel angeordnet. Darunter, dass "ein weiteres Objekt ein Objekt zumindest teilweise umgreift", soll insbesondere verstanden werden, dass zumindest eine Gerade existiert, welche zunächst durch das weitere Objekt, danach durch das Objekt und anschließend wiederum durch das weitere Objekt verläuft. Ferner kann die Filtereinheit zusätzliche Filterelemente, insbesondere eine Vielzahl zusätzlicher Filterelemente, insbesondere zumindest im Wesentlichen äquivalent zu dem Filterelement ausgebildete zusätzliche Filterelemente, aufweisen, welche wiederum das Filterelement und das weitere Filterelement umgreifen. Alternativ kann das weitere Filterelement neben dem Filterelement angeordnet sein. Hierdurch kann insbesondere ein Bauraum verringert und vorteilhaft eine Packungsdichte der Filtereinheit verbessert werden.

Erfindungsgemäß wird vorgeschlagen, dass das Filterelement im montierten Zustand eine Haupterstreckungsebene aufweist und das weitere Filterelement im montierten Zustand eine weitere Haupterstreckungsebene aufweist, welche verschieden von der Haupterstreckungsebene des Filterelements ist. Insbesondere kann die Haupterstreckungsebene des Filterelements zumindest im Wesentlichen parallel zu der weiteren Haupterstreckungsebene des weiteren Filterelements angeordnet sein. Hierdurch kann eine einfache Anordnung der Filterelemente erreicht werden. Die Haupterstreckungsebene des Filterelements und die weitere Haupterstreckungsebene des weiteren Filterelements sind zueinander winklig angeordnet. Flächennormalen der Haupterstreckungsebene des Filterelements und der weiteren Haupterstreckungsebene des weiteren Filterelements schließen einen Winkel von zumindest 20°, vorzugsweise von zumindest 50° und besonders bevorzugt von zumindest 80° und von höchstens 160°, vorzugsweise von höchstens 130° und besonders bevorzugt von höchstens 100° ein. Vorteilhaft sind die Haupterstreckungsebene des Filterelements und die weitere Haupterstreckungsebene des weiteren Filterelements zumindest im Wesentlichen senkrecht zueinander angeordnet. Der Ausdruck "zumindest im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel insbesondere eine maximale Abweichung von 90° von insbesondere kleiner als 8°, vorteilhaft kleiner als 5° und besonders vorteilhaft kleiner als 2°, aufweist. Hierdurch kann ein homogener Durchfluss durch die Filterelemente erreicht werden.

Um insbesondere eine Packungsdichte der Filtereinheit und vorteilhaft einen homogenen Durchfluss durch die Filterelemente weiter zu verbessern, weist die Filtereinheit eine Gruppe von Filterelementen und eine weitere Gruppe von weiteren Filterelementen auf. Die Gruppe von Filterelementen weist zumindest ein zusätzliches Filterelement, insbesondere mehrere zusätzliche Filterelemente, auf, welches/welche zumindest im Wesentlichen äquivalent zu dem Filterelement ausgebildet ist/sind. Die weitere Gruppe von weiteren Filterelementen weist zumindest ein zusätzliches weiteres Filterelement, insbesondere mehrere zusätzliche weitere Filterelemente, auf, welches/welche zumindest im Wesentlichen äquivalent zu dem weiteren Filterelement ausgebildet ist/sind. Die Filterelemente einer Gruppe sind mittels eines Netzes gebündelt. Jeweils eines der weiteren Filterelemente der weiteren Gruppe von weiteren Filterelementen umgreift zumindest jeweils zumindest eines der Filterelemente der Gruppe der Filterelemente. Jeweils eines der weiteren Filterelemente der weiteren Gruppe von weiteren Filterelementen weist zumindest vorzugsweise zumindest eine Haupterstreckungsebene auf, welche jeweils von zumindest einer Haupterstreckungsebene wenigstens eines Filterelements der Gruppe der Filterelemente verschieden ist. Alternativ oder zusätzlich kann die Filtereinheit nur eine der Gruppen oder zusätzliche Gruppen, insbesondere mit zusätzlichen Filterelementen, welche vorteilhaft das Filterelement und das weitere Filterelement umgreifen, aufweisen.

Erfindungsgemäß wird vorgeschlagen, dass die Filtereinheit zumindest im Wesentlichen rohrförmig ausgebildet ist. Vorzugsweise sind Filterelemente der Filtereinheit kreisförmig angeordnet und bilden zumindest teilweise eine Rohrwandung der Filtereinheit. Die rohrförmige Filtereinheit definiert insbesondere einen Rohrkanal, in welchem vorteilhaft zumindest teilweise die Adsorptionseinheit angeordnet sein kann. Hierdurch kann ein Bauraum weiter reduziert werden.

In einer weiter bevorzugten Ausgestaltung der Erfindung wird vorgeschlagen, dass die Adsorptionseinheit zumindest im Wesentlichen rohrförmig ausgebildet ist. Die rohrförmige Adsorptionseinheit definiert insbesondere einen Rohrkanal, in welchem vorteilhaft zumindest teilweise die Filtereinheit angeordnet sein kann. Hierdurch kann ein Bauraum weiter verringert werden.

Um die Adsorptionseinheit vor Beschädigungen zu schützen, wird vorgeschlagen, dass die Wasseraufbereitungsvorrichtung ein Filtergehäuse aufweist, in welchem die Filtereinheit zumindest teilweise angeordnet ist. Das Filtergehäuse ist insbesondere als ein Hohlzylinder ausgebildet, welcher bevorzugt einen Zylindermantel aufweist, der die Filtereinheit teilweise umschließt. Die Filtereinheit ist insbesondere zu weniger als 80 %, vorzugsweise zu weniger als 60 % und besonders bevorzugt zu weniger als 40 % in dem Filtergehäuse angeordnet. Ferner umschließt der Zylindermantel insbesondere das Halteelement zumindest teilweise, vorzugsweise zumindest zu einem Großteil und besonders bevorzugt vollständig. Insbesondere ist das Halteelement stoffschlüssig mit dem Filtergehäuse verbunden.

Um die Filtereinheit vor Beschädigungen zu schützen, wird vorgeschlagen, dass die Wasseraufbereitungsvorrichtung ein Adsorptionsgehäuse aufweist, in welchem die Adsorptionseinheit zumindest teilweise, insbesondere zu einem Großteil und vorzugsweise vollständig angeordnet ist. Das Adsorptionsgehäuse ist insbesondere als ein Hohlzylinder ausgebildet, welcher bevorzugt einen Zylindermantel aufweist, der die Adsorptionseinheit zumindest teilweise, insbesondere zumindest zu einem Großteil und bevorzugt vollständig umschließt. Unter dem Ausdruck "zumindest zu einem Großteil" sollen dabei insbesondere mehr als 50 %, vorteilhaft mehr als 65 %, vorzugsweise mehr als 75 %, besonders bevorzugt mehr als 85 % und besonders vorteilhaft zumindest 95 % verstanden werden. Hierdurch kann die Adsorptionseinheit vor Beschädigungen geschützt werden.

Es wird des Weiteren vorgeschlagen, dass das Filtergehäuse dem Adsorptionsgehäuse strömungstechnisch vorgeschaltet ist. Insbesondere ist die in dem Filtergehäuse angeordnete Filtereinheit der in dem Adsorptionsgehäuse angeordneten Adsorptionseinheit strömungstechnisch vorgeschaltet. Hierdurch kann eine effiziente Anordnung und insbesondere daraus resultierende effiziente Durchströmung des Adsorptionsgehäuses erreicht werden.

Denkbar ist insbesondere, dass das Filtergehäuse und das Adsorptionsgehäuse einstückig miteinander ausgebildet sind. Um eine Flexibilität der Wasseraufbereitungsvorrichtung und insbesondere eine Kundenfreundlichkeit zu erhöhen und um zu ermöglichen, dass einzelne Komponenten der Wasseraufbereitungsvorrichtung ausgetauscht werden könnten, wird vorgeschlagen, dass die Wasseraufbereitungsvorrichtung eine Verbindungseinheit aufweist, welche das Adsorptionsgehäuse und das Filtergehäuse im montierten Zustand miteinander verbindet. Die Verbindungseinheit ist insbesondere zu einer zumindest formschlüssigen Verbindung des Adsorptionsgehäuses und des Filtergehäuses vorgesehen. Alternativ oder zusätzlich kann die Verbindungseinheit auch zu einer kraft- und/oder stoffschlüssigen Verbindung vorgesehen sein. Die Verbindungseinheit ist insbesondere zumindest teilweise einstückig mit dem Adsorptionsgehäuse und/oder dem Filtergehäuse ausgebildet. Die Verbindungseinheit umfasst zumindest ein Verbindungselement, welches im montierten Zustand das Filtergehäuse mit dem Adsorptionsgehäuse verbindet. Das Verbindungselement ist insbesondere separat von dem Adsorptionsgehäuse und/oder dem Filtergehäuse ausgebildet. Vorzugsweise ist das Verbindungselement als eine vorzugsweise rohrförmige Muffe ausgebildet. Ferner weist die Verbindungseinheit zumindest eine Verbindungselementaufnahme auf, welche dazu vorgesehen ist, das Verbindungselement aufzunehmen. Die Verbindungselementaufnahme ist als eine Ausnehmung des Filtergehäuses und/oder des Adsorptionsgehäuses ausgebildet.

Es wird ferner vorgeschlagen, dass die Wasseraufbereitungsvorrichtung zumindest eine Siebeinheit aufweist, welche das Filtergehäuse und das Adsorptionsgehäuse voneinander trennt und zumindest das Adsorptionsgehäuse von wenigstens einer Seite zumindest teilweise verschließt. Die Siebeinheit umfasst insbesondere zumindest einen Siebdeckel, welcher zumindest dazu vorgesehen ist, die Adsorptionseinheit von der Filtereinheit zu trennen. Der Siebdeckel weist insbesondere mehrere Durchlassöffnungen auf, um einen Durchfluss von Wasser zwischen Filtereinheit und Adsorptionseinheit zu ermöglichen. Der Siebdeckel ist insbesondere formschlüssig mit dem Adsorptionsgehäuse verbindbar. Alternativ oder zusätzlich kann der Siebdeckel einstückig mit dem Adsorptionsgehäuse ausgebildet sein. Ferner weist die Siebeinheit insbesondere zumindest eine, vorzugsweise poröse Fritte auf. Die Fritte ist insbesondere auf einer der Adsorptionseinheit zugewandten Seite der Siebeinheit angeordnet und ist vorzugsweise dazu vorgesehen, eine Verunreinigung der Adsorptionseinheit und besonders bevorzugt ein Austreten der Adsorptionseinheit aus dem Adsorptionsgehäuse zu vermeiden. Die Fritte ist insbesondere aus einem vorzugsweise vernetzten Kunststoff, insbesondere aus zumindest einem vernetzten Polymer, vorteilhaft Polyethylen, gebildet. Alternativ oder zusätzlich kann die Fritte zumindest teilweise einstückig mit der Adsorptionseinheit ausgebildet sein. Hierdurch kann insbesondere ein Schutz der empfindlichen Filtereinheit verbessert werden, da diese vor aus der Adsorptionseinheit austretenden Partikeln, insbesondere falls diese beschädigt ist, geschützt werden kann.

Weiterhin wird vorgeschlagen, dass die Wasseraufbereitungsvorrichtung eine Kartusche aufweist, in welcher im montierten Zustand das Adsorptionsgehäuse und das Filtergehäuse angeordnet sind und welche Öffnungen aufweist, welche in axialer Richtung betrachtet in Umfangsrichtung zueinander versetzt angeordnet sind. Unter einer "axialen Richtung" soll insbesondere eine Haupterstreckungsrichtung und/oder vorzugsweise eine Drehsymmetrieachse der Kartusche, in welcher diese vorteilhaft zumindest eine dreizählige Drehsymmetrie aufweist, verstanden werden. Unter einer "Haupterstreckungsrichtung" eines Objekts soll dabei insbesondere eine Richtung verstanden werden, welche parallel zu einer längsten Kante eines kleinsten gedachten Quaders verläuft, welcher das Objekt gerade noch vollständig umschließt. Unter einer "Umfangsrichtung" soll insbesondere eine Richtung senkrecht zur Haupterstreckungsrichtung und/oder insbesondere eine Drehrichtung um die Drehsymmetrieachse der Kartusche verstanden werden. Insbesondere sind die Öffnungen in Umfangsrichtung um zumindest einen Großteil der Kartusche herum angeordnet. Die Öffnungen sind insbesondere zum Anströmen der Filtereinheit mit aufzubereitendem Wasser vorgesehen. Vorteilhaft weist die Kartusche weitere Öffnungen auf, welche entlang der axialen Richtung und insbesondere entlang der Umfangsrichtung versetzt zu den Öffnungen angeordnet sind. Die weiteren Öffnungen sind insbesondere zumindest im Wesentlichen äquivalent zu den Öffnungen ausgebildet. Die Kartusche ist insbesondere aus einem Kunststoff, vorzugsweise aus Polypropylen und besonders bevorzugt aus einem Polypropylen-Homopolymerisat ausgebildet. Hierdurch können insbesondere die in dem Filtergehäuse angeordnete Filtereinheit und die in dem Adsorptionsgehäuse angeordnete Adsorptionseinheit zusätzlich geschützt werden. Insbesondere kann die Filtereinheit besonders homogen von Wasser angeströmt werden.

Die Wasseraufbereitungsvorrichtung soll hierbei nicht auf die oben beschriebene Anwendung und Ausführungsform beschränkt sein. Insbesondere kann die Wasseraufbereitungsvorrichtung zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Wasseraufbereitungskartusche mit einer Wasseraufbereitungsvorrichtung in einer Schnittansicht,
- Fig. 2: eine Kartusche der Wasseraufbereitungsvorrichtung in einer Explosionsdarstellung,
- Fig. 3: einen Teil der Wasseraufbereitungsvorrichtung in einer Explosionsdarstellung,
- Fig. 4: einen Teil einer Filtereinheit der Wasseraufbereitungsvorrichtung in einer perspektivischen Darstellung,
- Fig. 5: einen Teil einer Adsorptionseinheit der Wasseraufbereitungsvorrichtung in einer schematischen Schnittansicht,
- Fig. 6: ein System mit einer Wasseraufbereitungsvorrichtung und einer Vorfiltrationseinheit in einer schematischen Schnittansicht,
- Fig. 7: eine weitere Wasseraufbereitungsvorrichtung in einer Schnittansicht,
- Fig. 8: eine alternative Wasseraufbereitungsvorrichtung in einer Schnittansicht und
- Fig. 9: eine weitere alternative Wasseraufbereitungsvorrichtung in einer Schnittansicht.

### Beschreibung der Ausführungsbeispiele

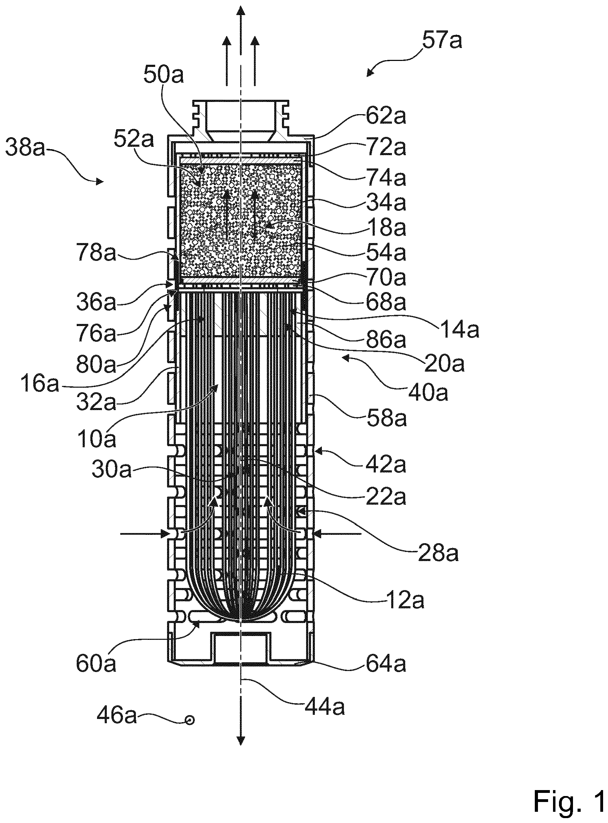

Fig. 1 zeigt eine Wasseraufbereitungskartusche 57a mit einer Wasseraufbereitungsvorrichtung in einer Schnittansicht. Die Wasseraufbereitungsvorrichtung ist zu einer Entfernung von Mikroschadstoffen, insbesondere Arzneimitteln, aus Wasser, insbesondere Trinkwasser, vorgesehen. Hierzu ist die Wasseraufbereitungskartusche 57a zu einem Einbau in einem System zur Aufbereitung von Wasser vorgesehen.

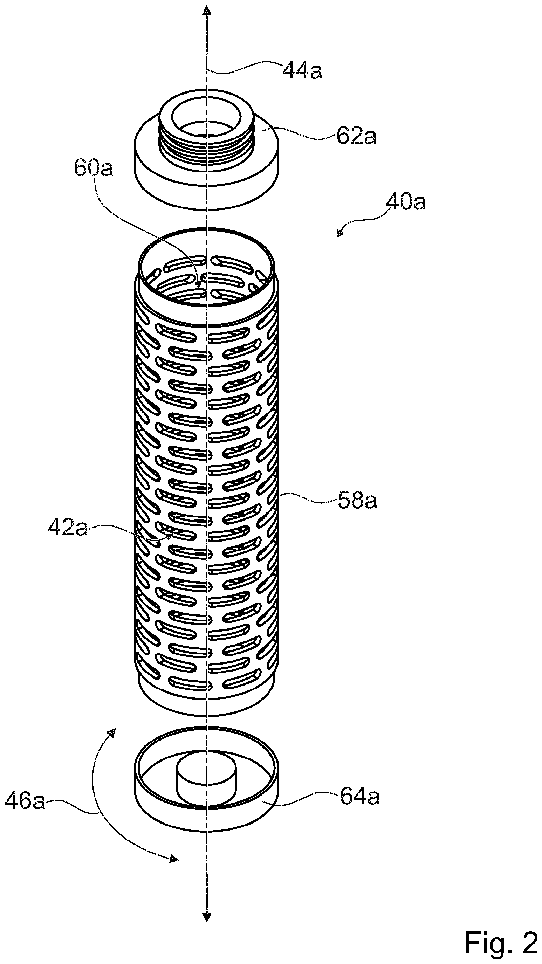

Fig. 2 zeigt eine Kartusche 40a der Wasseraufbereitungsvorrichtung. Die Kartusche 40a ist rohrförmig ausgebildet. Die Kartusche 40a weist einen Zylindermantel 58a auf. Der Zylindermantel 58a definiert in seinem Inneren einen Aufnahmeraum 60a. Der Aufnahmeraum 60a dient zur Aufnahme weiterer Einheiten der Wasseraufbereitungsvorrichtung. Die Kartusche 40a weist Öffnungen 42a auf, welche in axialer Richtung 44a betrachtet in Umfangsrichtung 46a zueinander versetzt angeordnet sind. Ferner sind die Öffnungen 42a in axial Richtung 44a zueinander versetzt angeordnet. Die Öffnungen 42a sind durch Ausnehmungen, insbesondere zur axialen Richtung 44a senkrechte Ausnehmungen, des Zylindermantels 58a gebildet. Die Kartusche 40a weist einen Kartuschenanschluss 62a auf. Der Kartuschenanschluss 62a ist zum Anschluss der Wasseraufbereitungsvorrichtung an eine Wasserleitung vorgesehen. Der Kartuschenanschluss 62a weist ein Schraubgewinde zum Anschluss der Wasseraufbereitungsvorrichtung auf. Der Kartuschenanschluss 62a verschließt den Zylindermantel 58a von einer Seite, insbesondere in axialer Richtung 44a. Ferner weist die Kartusche 40a einen Kartuschenabschluss 64a auf. Der Kartuschenabschluss 64a verschließt den Zylindermantel 58a von einer weiteren Seite, insbesondere in axialer Richtung 44a. Die Kartusche 40a ist aus einem Kunststoff ausgebildet. Vorteilhaft ist die Kartusche 40a aus Polypropylen und zwar besonders bevorzugt aus einem Polypropylen-Homopolymerisat (PP-H) ausgebildet.

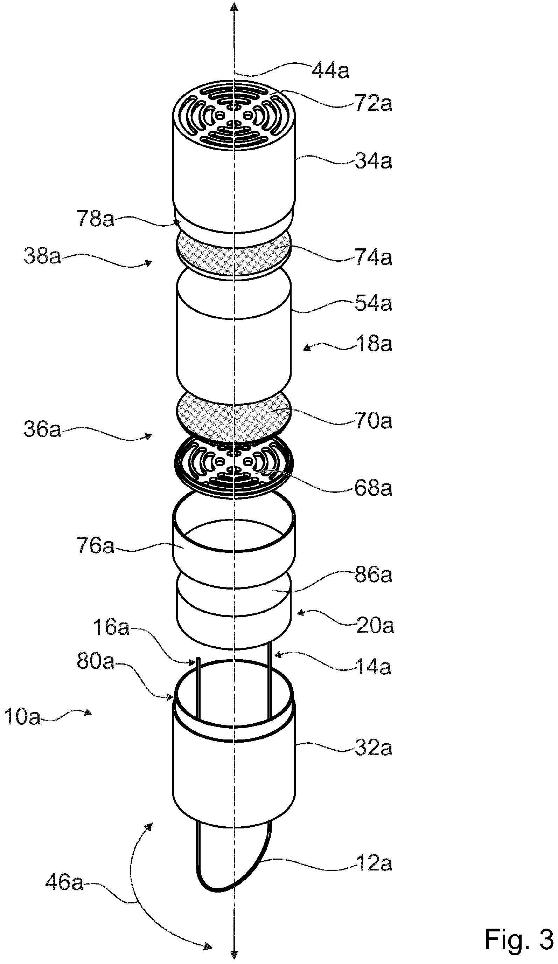

Fig. 3 zeigt eine Explosionsdarstellung eines Teils der Wasseraufbereitungsvorrichtung. Die Wasseraufbereitungsvorrichtung weist ein Filtergehäuse 32a auf. Das Filtergehäuse 32a ist im montierten Zustand in dem Aufnahmeraum 60a der Kartusche 40a angeordnet. In dem Filtergehäuse 32a ist zumindest teilweise eine Filtereinheit 10a der Wasseraufbereitungsvorrichtung angeordnet. Die Filtereinheit 10a ist in Haupterstreckungsrichtung der Filtereinheit 10a betrachtet zu weniger als 50 % innerhalb des Filtergehäuses 32a angeordnet. Das Filtergehäuse 32a ist als ein Hohlzylinder ausgebildet. Das Filtergehäuse 32a weist einen Zylindermantel auf, der ein Halteelement 20a der Wasseraufbereitungsvorrichtung zumindest teilweise umschließt. Ferner weist die Wasseraufbereitungsvorrichtung ein Adsorptionsgehäuse 34a auf. Das Adsorptionsgehäuse 34a ist im montierten Zustand in dem Aufnahmeraum 60a der Kartusche 40a angeordnet. In dem Adsorptionsgehäuse 34a ist eine Adsorptionseinheit 18a der Wasseraufbereitungsvorrichtung angeordnet. Das Adsorptionsgehäuse 34a ist als ein Hohlzylinder ausgebildet. Das Adsorptionsgehäuse 34a weist einen Zylindermantel auf, der die Adsorptionseinheit 18a zumindest teilweise umschließt. In einem Betriebszustand, in welchem die Wasseraufbereitungsvorrichtung von Wasser durchströmt ist, ist das Filtergehäuse 32a in Strömungsrichtung betrachtet dem Adsorptionsgehäuse 34a vorgeschaltet.

Die Wasseraufbereitungsvorrichtung weist eine Siebeinheit 38a auf. Die Siebeinheit 38a trennt das Filtergehäuse 32a und das Adsorptionsgehäuse 34a voneinander. Ferner verschließt die Siebeinheit 38a das Adsorptionsgehäuse 34a von wenigstens einer Seite zumindest teilweise. Die Siebeinheit 38a umfasst einen Siebdeckel 68a. Der Siebdeckel 68a verschließt die Adsorptionseinheit 18a von einer Seite zumindest teilweise. Ferner trennt der Siebdeckel 68a die Adsorptionseinheit 18a von der Filtereinheit 10a. Der Siebdeckel 68a ist formschlüssig mit dem Adsorptionsgehäuse 34a verbunden. Ferner könnte der Siebdeckel 68a kraft- und/oder stoffschlüssig mit dem Adsorptionsgehäuse 34a verbunden sein. Alternativ oder zusätzlich kann der Siebdeckel 68a einstückig mit dem Adsorptionsgehäuse 34a ausgebildet sein. Der Siebdeckel 68a weist mehrere Durchlassöffnungen auf. Die Durchlassöffnungen sind dazu vorgesehen, einen Wasserfluss zwischen der Filtereinheit 10a und der Adsorptionseinheit 18a zu ermöglichen.

Die Siebeinheit 38a umfasst zumindest eine Fritte 70a. Die Fritte 70a ist scheibenförmig. Die Fritte 70a ist aus einem porösen Material hergestellt. Die Fritte 70a ist aus einem vernetzten Polyethylen hergestellt. Die Fritte 70a ist auf einer der Adsorptionseinheit 18a zugewandten Seite der Siebeinheit 38a angeordnet. Die Fritte 70a ist in dem Adsorptionsgehäuse 34a angeordnet. Die Fritte 70a ist in Durchflussrichtung betrachtet hinter dem Siebdeckel 68a und insbesondere vor der Adsorptionseinheit 18a angeordnet. Die Fritte 70a ist dazu vorgesehen, eine Verunreinigung der Adsorptionseinheit 18a und vorzugsweise ein zumindest teilweises Austreten der Adsorptionseinheit 18a aus dem Adsorptionsgehäuse 34a zu vermeiden.

Die Siebeinheit 38a weist einen weiteren Siebdeckel 72a auf. Der weitere Siebdeckel 72a ist zumindest im Wesentlichen äquivalent zu dem Siebdeckel 68a ausgebildet. Der weitere Siebdeckel 72a ist einstückig mit dem Adsorptionsgehäuse 34a ausgebildet. Denkbar ist, dass der weitere Siebdeckel 72a separat von dem Adsorptionsgehäuse 34a ausgebildet und insbesondere kraft- und/oder formschlüssig mit diesem verbunden ist. Der weitere Siebdeckel 72a verschließt das Adsorptionsgehäuse 34a von wenigstens einer weiteren Seite zumindest teilweise. Der weiteren Siebdeckel 72a ist in Durchflussrichtung betrachtet hinter der Adsorptionseinheit 18a angeordnet. Ferner weist die Siebeinheit 38a eine weitere Fritte 74a auf. Die weitere Fritte 74a ist zumindest im Wesentlichen äquivalent zu der Fritte 70a ausgebildet. Die weitere Fritte 74a ist in dem Adsorptionsgehäuse 34a angeordnet. Die weitere Fritte 74a ist in Durchflussrichtung betrachtet hinter der Adsorptionseinheit 18a und insbesondere vor dem weiteren Siebdeckel 72a angeordnet.

Die Wasseraufbereitungsvorrichtung weist eine Verbindungseinheit 36a auf. Die Verbindungseinheit 36a verbindet im montierten Zustand das Adsorptionsgehäuse 34a und das Filtergehäuse 32a, insbesondere formschlüssig, miteinander. Alternativ oder zusätzlich kann die Verbindungseinheit 36a auch zu einer kraft- und/oder stoffschlüssigen Verbindung vorgesehen sein. Es ist beispielsweise denkbar, dass die Verbindungseinheit 36a zu einer zusätzlichen kraftschlüssigen Verbindung ein Gewinde aufweist. Die Verbindungseinheit 36a umfasst zumindest ein Verbindungselement 76a, welches im montierten Zustand das Filtergehäuse 32a mit dem Adsorptionsgehäuse 34a verbindet. Das Verbindungselement 76a ist separat von dem Adsorptionsgehäuse 34a und/oder dem Filtergehäuse 32a ausgebildet. Alternativ oder zusätzlich kann das Verbindungselement 76a mit dem Filtergehäuse 32a und/oder dem Adsorptionsgehäuse 34a zumindest teilweise einstückig ausgebildet sein. Das Verbindungselement 76a ist als eine Muffe ausgebildet.

Die Verbindungseinheit 36a weist zumindest eine Verbindungselementaufnahme 78a auf, welche dazu vorgesehen ist, das Verbindungselement 76a aufzunehmen. Die Verbindungselementaufnahme 78a ist korrespondierend zu dem Verbindungselement 76a ausgebildet. Die Verbindungselementaufnahme 78a ist als eine Ausnehmung des Adsorptionsgehäuses 34a ausgebildet. Die Verbindungseinheit 36a weist eine weitere Verbindungselementaufnahme 80a auf. Die weitere Verbindungselementaufnahme 80a ist zumindest im Wesentlichen äquivalent zu der Verbindungselementaufnahme 78a ausgebildet. Die weitere Verbindungselementaufnahme 80a ist als eine Ausnehmung des Filtergehäuses 32a ausgebildet.

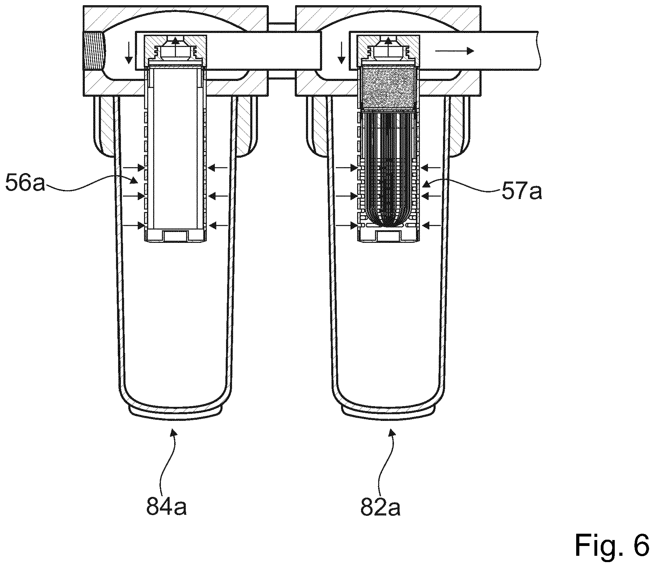

Bei einer Montage der Wasseraufbereitungsvorrichtung wird die weitere Fritte 74 a im Adsorptionsgehäuse 34a angeordnet. Ferner wird die Adsorptionseinheit 18a, insbesondere in Durchflussrichtung betrachtet hinter der weiteren Fritte 70a, in dem Adsorptionsgehäuse 34a angeordnet. Ferner wird die Fritte 70a, insbesondere in Durchflussrichtung betrachtet nach der Adsorptionseinheit 18a, in dem Adsorptionsgehäuse 34a angeordnet. Der Siebdeckel 68a verschließt das Adsorptionsgehäuse 34a. Die Filtereinheit 10a wird in dem Filtergehäuse 32a angeordnet. Das Filtergehäuse 32a wird in Durchflussrichtung betrachtet nach dem Adsorptionsgehäuse 34a angeordnet. Die Verbindungseinheit 36a verbindet das Adsorptionsgehäuse 34a und das Filtergehäuse 32a. Das Verbindungselement 76a greift in die Verbindungselementaufnahme 78a ein. Das Verbindungselement 76a greift in die weitere Verbindungselementaufnahme 80a ein. Das Filtergehäuse 32a und das Adsorptionsgehäuse 34 werden in dem Aufnahmeraum 60a der Kartusche 40a angeordnet. Der Zylindermantel 58a wird von dem Kartuschenabschluss 64a verschlossen. Ferner wird der Zylindermantel 58a mit dem Kartuschenanschluss 62a verbunden. Ferner kann die Kartusche 40a in einem übergeordneten Gehäuse 82a angeordnet werden (vgl. Fig. 6).

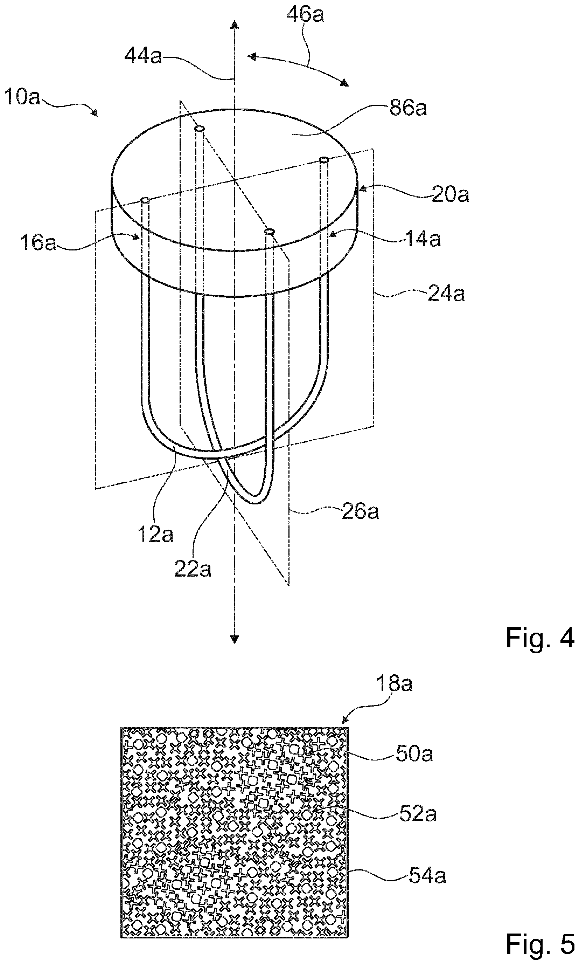

In Fig. 4 ist schematisch ein Teil der Filtereinheit 10a dargestellt. Die Filtereinheit 10a ist in einem Betriebszustand der Wasseraufbereitungsvorrichtung wenigstens zu einer Filterung des Wassers vorgesehen. Die Filtereinheit 10a ist als eine Membranfiltereinheit ausgebildet. Die Filtereinheit 10a weist zumindest ein Filterelement 12a auf. Die Filtereinheit 10a weist insbesondere eine Vielzahl von Filterelementen 12a, 22a auf, wobei in Fig. 4 der Übersichtlichkeit halber nur zwei zueinander äquivalente Filterelemente 12a, 22a dargestellt sind. Das Filterelement 12a ist röhrenförmig. Das Filterelement 12a ist als eine Filtermembran ausgebildet. Bei der Filtermembran handelt es sich um eine Hohlfaserfiltermembran. Das Filterelement 12a weist eine Wandung auf. Die Wandung bildet die Filtermembran. Die Wandung definiert einen Hohlkanal des Filterelements 12a. Das Filterelement 12a weist einen ersten Endabschnitt 14a und einen zweiten Endabschnitt 16a auf. Die Endabschnitte 14a, 16a erstrecken sich entlang des Filterelements 12 über maximal 5 cm. Die Endabschnitte 14a, 16a sind mittels des Halteelements 20a der Wasseraufbereitungsvorrichtung fest zueinander angeordnet. Die Endabschnitte 14a, 16a des Filterelements 12a sind fest mit dem Halteelement 20a verbunden. Das Halteelement 20a ist als ein scheibenförmiger Block ausgebildet. Das Halteelement 20a ist stoffschlüssig mit dem Filtergehäuse 32a verbunden. Das Halteelement 20a ist vorteilhaft aus einem Bindemittel 86a gebildet. Das Bindemittel 86a ist ein Epoxidharz. Denkbar ist, dass ein anderes Bindemittel 86a verwendet werden kann, wie beispielsweise ein Kleber und/oder ein Kunststoff. Die Endabschnitte 14a, 16a werden vor einer Montage des Filterelements 12a derart verödet, dass das Bindemittel 86a nicht das Filterelement 12a, insbesondere die Wandung des Filterelements 12a, verunreinigt. Bei einer Montage wird das Filtergehäuse 32a mit dem Bindemittel 86a gefüllt. Die Endabschnitte 14a, 16a des Filterelements 12a werden in dem noch flüssigen Bindemittel 86a angeordnet. Das Bindemittel 86a wird zum Halteelement 20a ausgehärtet. Ferner wird das ausgehärtete Bindemittel 86a derart angeschliffen, dass Öffnungen der Endabschnitte 14a, 16a des Filterelements 12a freiliegen.

Das Filterelement 12a ist im montierten Zustand zumindest abschnittsweise gebogen und weist insbesondere eine Schlingenform auf. Das Filterelement 12a ist derart gebogen, dass die Endabschnitte 14a, 16a des Filterelements 12a einen Innenwinkel von 0° bis 90° einschließen. Im vorliegenden Fall sind die Endabschnitte 14a, 16a zumindest im Wesentlichen parallel oder vorzugsweise antiparallel zueinander, so dass das Filterelement 12a vorzugsweisen u-förmig gebogen ist. Im vorliegenden Fall beträgt der Innenwinkel demzufolge ungefähr 0°. Das Filterelement 12a weist insbesondere eine Haupterstreckungsebene 24a auf. Das Filterelement 12a ist über die gesamte Erstreckung des Filterelements 12a von der Haupterstreckungsebene 24a geschnitten.

Ferner weist die Filtereinheit 10a zumindest ein weiteres Filterelement 22a auf. Das weitere Filterelement 22a ist zumindest im Wesentlichen äquivalent zu dem Filterelement 12a ausgebildet, insbesondere äquivalent zu diesem geformt und vorteilhaft äquivalent mit dem Halteelement 20a befestigt. Das Filterelement 12a und das weitere Filterelement 22a unterscheiden sich voneinander durch eine Länge. Das weitere Filterelement 22a umgreift das Filterelement 12a zumindest teilweise. Das weitere Filterelement 22a weist eine weitere Haupterstreckungsebene 26a auf. Im montierten Zustand ist die weitere Haupterstreckungsebene 26a des weiteren Filterelements 22a verschieden von der Haupterstreckungsebene 24a des Filterelements 12a. Ferner sind die Haupterstreckungsebene 24a des Filterelements 12a und die weitere Haupterstreckungsebene 26a des weiteren Filterelements 22a zueinander winklig angeordnet. Im vorliegenden Fall sind die Haupterstreckungsebene 24a des Filterelements 12a und die weitere Haupterstreckungsebene 26a des weiteren Filterelements 22a zumindest im Wesentlichen senkrecht zueinander. Ferner können die Haupterstreckungsebenen 24a, 26a auch einen anderen Winkel zueinander aufweisen, insbesondere von 20° bis 160°, oder alternativ zumindest im Wesentlichen parallel zueinander angeordnet sein.

Die Filtereinheit 10a weist ferner eine Gruppe 28a (vgl. Fig. 2) von Filterelementen 12a auf. Die Gruppe 28a von Filterelementen 12a weist zumindest ein zusätzliches Filterelement 12a, insbesondere mehrere zusätzliche Filterelemente 12a auf, welches/welche zumindest im Wesentlichen äquivalent zu dem Filterelement 12a ausgebildet ist/sind. Die Filterelemente 12a der Gruppe 28a sind insbesondere mittels eines Netzes des Wasseraufbereitungsvorrichtung gebündelt. Die Filtereinheit 10a weist ferner eine weitere Gruppe 30a (vgl. Fig. 2) von weiteren Filterelementen 22a auf. Die weitere Gruppe 30a von weiteren Filterelementen 22a weist zumindest ein zusätzliches weiteres Filterelement 22a, insbesondere mehrere zusätzliche weitere Filterelemente 22a auf, welches/welche zumindest im Wesentlichen äquivalent zu dem weiteren Filterelement 22a ist/sind. Die Filterelemente 22a der Gruppe 30a sind insbesondere mittels eines weiteren Netzes des Wasseraufbereitungsvorrichtung gebündelt. Alternativ oder zusätzlich kann die Filtereinheit 10a nur eine der Gruppen 28a, 30a oder zusätzliche Gruppen aufweisen.

In Fig. 5 ist die Adsorptionseinheit 18a schematisch in einer Schnittansicht dargestellt. Die Adsorptionseinheit 18a weist ein unspezifisches Adsorptionselement 50a auf. Die Adsorptionseinheit 18a kann zu mindestens 10 % und zu höchstens 98 % aus dem unspezifischen Adsorptionselement 50a bestehen. Im vorliegenden Fall besteht die Adsorptionseinheit 18a zu 80 % aus dem unspezifischen Adsorptionselement 50a. Insbesondere kann die Adsorptionseinheit 18a auch zu weiteren Werten von 10 % bis 98 % aus dem unspezifischen Adsorptionselement 50a bestehen.

Das unspezifische Adsorptionselement 50a umfasst zumindest ein organisches Adsorptionsmittel. Im vorliegenden Fall ist das organische Adsorptionsmittel Aktivkohle. Das organische Adsorptionsmittel liegt dabei in Form einer zylinderförmigen Blocks vor. Das organische Adsorptionsmittel ist Aktivkohle, insbesondere gesinterten granulierte Aktivkohle. Alternativ oder zusätzlich kann das organische Adsorptionsmittel als Schüttung, insbesondere in granulierter Form vorliegen. Das unspezifische Adsorptionselement 50a umfasst einen Grundkörper 54a. Der Grundkörper 54a bildet zu einem Großteil die Adsorptionseinheit 18a aus. Die Adsorptionseinheit 18a weist ein Adsorptionsmittel auf, welches den Grundkörper 54a der Adsorptionseinheit 18a zumindest teilweise ausbildet. Im vorliegenden Fall bildet das organische Adsorptionsmittel den Grundkörper 54a zumindest teilweise aus. Alternativ kann das organische Adsorptionsmittel den Grundkörper 54a vollständig ausbilden.

Ferner umfasst das unspezifische Adsorptionselement 50a zumindest ein mineralisches Adsorptionsmittel. Das unspezifische Adsorptionselement 50a weist zu 5 % bis 20 % zumindest das eine mineralische Adsorptionsmittel auf. Im vorliegenden Fall weist das unspezifische Adsorptionselement 50a zu 5 % ein mineralisches Adsorptionsmittel auf. Im vorliegenden Fall ist das mineralische Adsorptionsmittel Bentonit. Ferner bildet das mineralische Adsorptionsmittel zumindest teilweise den Grundkörper 54a des unspezifischen Adsorptionselements 50a aus. Alternativ oder zusätzlich kann das unspezifische Adsorptionselement 50a als mineralisches Adsorptionsmittel Kieselgur, Kieselgel, Aluminiumoxid und/oder Zinkoxid aufweisen.

Die Adsorptionseinheit 18a weist ein spezifisches Adsorptionselement 52a auf. Die Adsorptionseinheit 18a kann zu mindestens 2 % und zu höchstens 90 % aus dem spezifischen Adsorptionselement 52a bestehen. Im vorliegenden Fall besteht die Adsorptionseinheit 18a zu 20 % aus dem spezifischen Adsorptionselement 52a. Insbesondere kann die Adsorptionseinheit 18a auch zu weiteren Werten von 2 % bis 90 % aus dem spezifischen Adsorptionselement 52a bestehen. Das spezifische Adsorptionselement 52a umfasst zumindest ein spezifisches Adsorptionsmittel. Alternativ oder zusätzlich kann der Grundkörper 54a der Adsorptionseinheit 18a zumindest teilweise aus einem spezifischen Adsorptionsmittel gebildet sein.

Das spezifische Adsorptionselement 52a umfasst zumindest ein Umkehrphasen-Adsorptionsmittel, wie beispielsweise ein quervernetztes, funktionalisiertes organisches Polymer. Vorzugsweise umfasst das spezifische Adsorptionselement 52a als Umkehrphasen-Adsorptionsmittel quervernetztes Ethylvinylbenzol. Ferner umfasst das spezifische Adsorptionselement 52a zumindest ein lonentauscher-Adsorptionsmittel. Das lonentauscher-Adsorptionsmittel kann als Kationentauscher oder Anionentauscher ausgebildet sein. Im vorliegenden Fall ist das lonentauscher-Adsorptionsmittel als ein Anionentauscher ausgebildet. Das lonentauscher-Adsorptionsmittel ist eine Agarose, welche mittels einer Ammoniumgruppe, vorzugsweise einer quaternären Ammoniumgruppe und besonders bevorzugt Diethylaminoethyl (DEAE), funktionalisiert ist. Ferner umfasst das spezifische Adsorptionselement 52a zumindest ein Adsorptionsmittel, welches zu einer Adsorption über Wasserstoffbrücken vorgesehen ist. Im vorliegenden Fall ist das Adsorptionsmittel, welches zu einer Adsorption über Wasserstoffbrücken vorgesehen ist, lineares und/oder quervernetztes Polyvinylpyrrolidon (PVPP). Ferner umfasst das spezifische Adsorptionselement 52a zumindest ein Komplexbildner-Adsorptionsmittel. Im vorliegenden Fall ist das Komplexbildner-Adsorptionsmittel Ethylendiamintetraessigsäure (EDTA). Alternativ oder zusätzlich kann das spezifische Adsorptionselement 52a weitere spezifische Adsorptionsmittel aufweisen.

Das unspezifische Adsorptionselement 50a und das spezifische Adsorptionselement 52a stehen zumindest teilweise miteinander in Kontakt. Das unspezifische Adsorptionselement 50a und das spezifische Adsorptionselement 52a sind zumindest teilweise ineinander angeordnet und insbesondere miteinander vermischt.

In einem Betriebszustand ist die Wasseraufbereitungsvorrichtung vollständig mit aufzubereitendem Wasser durchflossen (vgl. Fig. 1). Die Richtung, in welcher das Wasser in die Wasseraufbereitungsvorrichtung eintritt, ist insbesondere zumindest im Wesentlichen senkrecht zu einer Richtung, in welcher das Wasser die Wasseraufbereitungsvorrichtung verlässt. Das Wasser tritt durch die Öffnungen der Kartusche 40a, insbesondere zumindest im Wesentlichen senkrecht zur axialen Richtung 44a, in die Wasseraufbereitungsvorrichtung ein. Ferner dringt das Wasser zumindest im Wesentlichen senkrecht zur axialen Richtung 44a in die Filtereinheit 10a ein. Das Wasser durchdringt das Filterelement 12a, insbesondere die Wandung des Filterelements 12a, zumindest teilweise. Das Wasser wird mittels der Wandung gefiltert. Das Wasser sammelt sich im Inneren des Filterelements 12a, insbesondere im Hohlkanal. Der Hohlkanal leitet das Wasser in Richtung der Adsorptionseinheit 18a. Das Wasser durchdringt die Adsorptionseinheit 18a, insbesondere in axialer Richtung 44a. Im Wasser enthaltene Mikroschadstoffe werden von der Adsorptionseinheit 18a adsorbiert. Das Wasser verlässt die Wasseraufbereitungsvorrichtung durch den Kartuschenanschluss 62a, insbesondere in axialer Richtung 44a.

In Fig. 6 ist ein System mit der Wasseraufbereitungsvorrichtung und mit einer Vorfiltrationseinheit 56a gezeigt. Die Vorfiltrationseinheit 56a ist der Wasseraufbereitungsvorrichtung strömungstechnisch vorgeschaltet. Das System ist zu einem Einbau in eine Wasserleitung vorgesehen. Die Vorfiltrationseinheit 56a ist als Mikrofiltrationseinheit mit einer Filtermembran ausgebildet und zu einer Rückhaltung von groben Schmutzpartikeln mit einer Größe von zumindest 5 µm vorgesehen. In alternativen Ausgestaltungen können Filtermembranen verwendet werden, die für eine Zurückhaltung von groben Schmutzpartikeln mit anderen Größen, beispielsweise 20 µm, geeignet sind. In der Wasseraufbereitungsvorrichtung werden anschließend die Mikroschadstoffe entfernt.

Die Wasseraufbereitungsvorrichtung ist in dem übergeordneten Gehäuse 82a angeordnet. Das übergeordnete Gehäuse 82a weist einen Ablauf mit Schraubgewinde für einen Anschluss an eine Wasserleitung auf. Die Vorfiltrationseinheit 56a ist in einem weiteren übergeordneten Gehäuse 84a angeordnet. Das weitere übergeordnete Gehäuse 84a weist einen Anschluss mit Schraubgewinde für einen Anschluss an eine Wasserleitung auf. Die Vorfiltrationseinheit 56a und die Wasseraufbereitungsvorrichtung sind so zueinander angeordnet, dass Wasser, welches in das weitere übergeordnete Gehäuse 84a eintritt, zunächst die Vorfiltrationseinheit 56a passiert und anschließend in das übergeordnete Gehäuse 82a gelangt, in welchem das Wasser mittels der Wasseraufbereitungsvorrichtung aufbereitet wird.

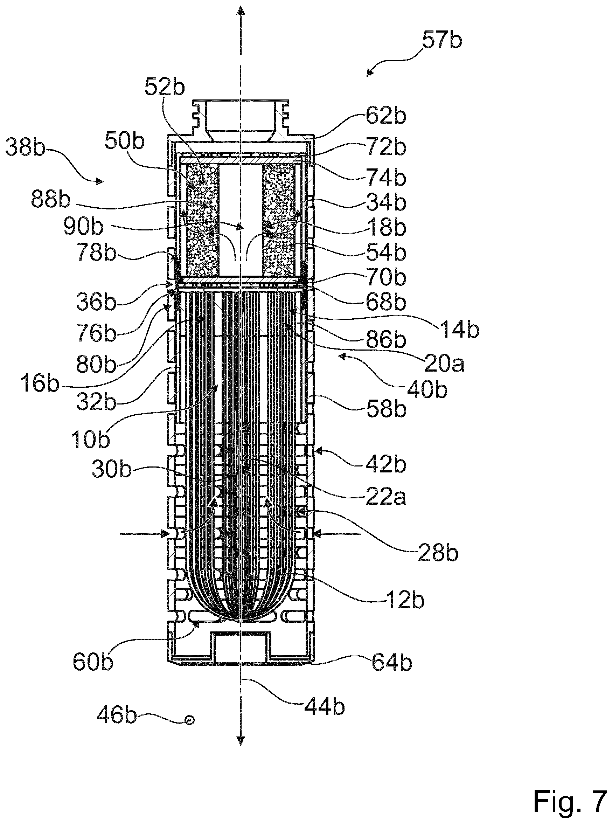

In den Fig. 7 bis 9 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 6, verwiesen werden kann. Zur Unterscheidung der Ausführungsbeispiele ist der Buchstabe a den Bezugszeichen des Ausführungsbeispiels in den Fig. 1 bis 6 nachgestellt. In den Ausführungsbeispielen der Fig. 7 bis 9 ist der Buchstabe a durch die Buchstaben b bis d ersetzt.

Die Fig. 7 zeigt eine weitere Wasseraufbereitungsvorrichtung. Das Ausführungsbeispiel der Fig. 7 unterscheidet sich von dem vorherigen Ausführungsbeispiel zumindest im Wesentlichen durch eine Adsorptionseinheit 18b der Wasseraufbereitungsvorrichtung. Im vorliegenden Fall ist die Adsorptionseinheit 18b zumindest im Wesentlichen rohrförmig ausgebildet. Die Adsorptionseinheit 18b weist eine Rohrwandung 88b auf. Die Rohrwandung 88b definiert einen Rohrkanal 90b. Im Betriebszustand durchdringt das aufzubereitende Wasser die Adsorptionseinheit 18b zumindest im Wesentlichen senkrecht zu einer axialen Richtung 44b. Das Wasser wird von einer Filtereinheit 10b in axialer Richtung 44b in den Rohrkanal 90b geführt. Der Rohrkanal 90b ist an einem Ende verschlossen, so dass das Wasser zumindest im Wesentlichen senkrecht zur axialen Richtung 44b die Rohrwandung 88b der Adsorptionseinheit 18b durchdringt. Nachdem das Wasser die Rohrwandung 88b durchdrungen hat, tritt es in ein Adsorptionsgehäuse 34b ein. Das Adsorptionsgehäuse 34b lenkt das Wasser in die axiale Richtung 44b um.

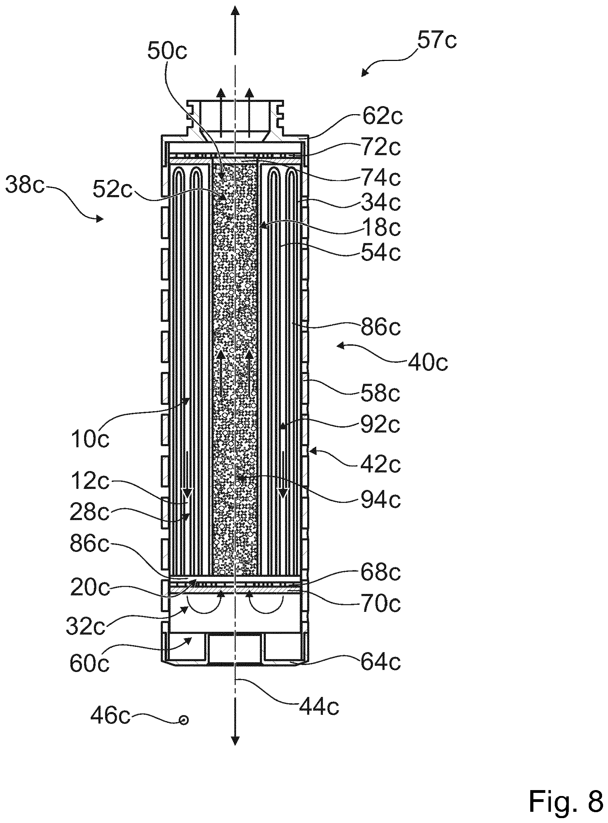

Die Fig. 8 zeigt eine alternative Wasseraufbereitungsvorrichtung. Das Ausführungsbeispiel der Fig. 8 unterscheidet sich von den vorherigen Ausführungsbeispielen zumindest im Wesentlichen dadurch, dass eine Filtereinheit 10c der Wasseraufbereitungsvorrichtung rohrförmig ausgebildet ist. Die Filtereinheit 10c weist eine Rohrwandung 92c auf. Die Rohrwandung 92c ist zumindest teilweise gebildet durch eine Gruppe 28c von Filterelementen 12c der Filtereinheit 10c. Die Filterelemente 12c sind in einem Kreis angeordnet. Ein Halteelement 20c der Wasseraufbereitungsvorrichtung, in welcher die Filterelemente 12c angeordnet sind, ist als eine Kreisscheibe ausgebildet. Die Kreisscheibe weist eine Öffnung auf. Die Rohrwandung 92c definiert einen Rohrkanal 94c. Ein Adsorptionsgehäuse 34c der Wasseraufbereitungsvorrichtung ist innerhalb des Rohrkanals 94c angeordnet. Ein Filtergehäuse 32c, in welchem die Filtereinheit 10c zumindest teilweise angeordnet ist, ist in axialer Richtung 44c verschlossen. Tritt Wasser in einem Betriebszustand aus den Filterelementen 12c in axialer Richtung 44c aus, wird es von dem Filtergehäuse 32c in umgekehrte Richtung umgelenkt. Das Wasser tritt durch die Öffnung eines Halteelements 20c in das Adsorptionsgehäuse 34c ein, insbesondere in axialer Richtung 44c.

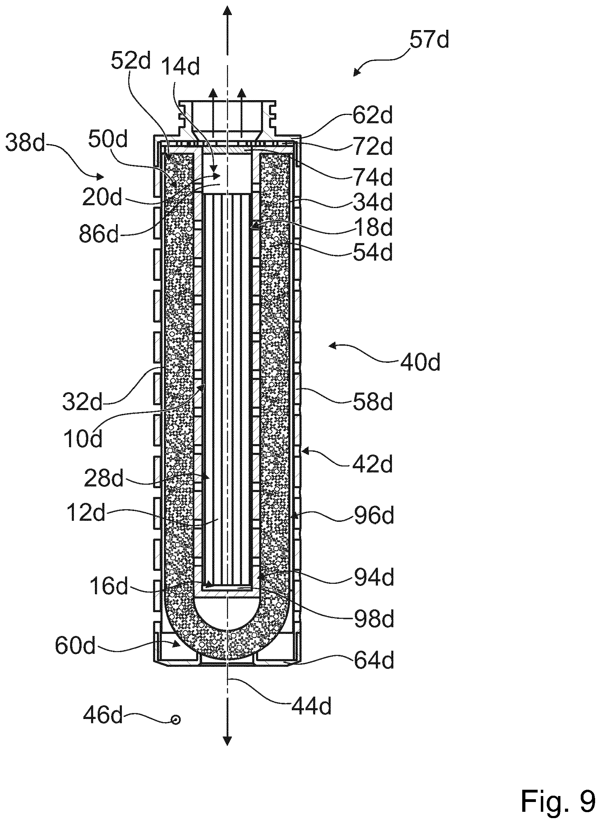

Die Fig. 9 zeigt eine weitere alternative Wasseraufbereitungsvorrichtung. Das Ausführungsbeispiel der Fig. 9 unterscheidet sich von den vorherigen Ausführungsbeispielen zumindest im Wesentlichen dadurch, dass eine Adsorptionseinheit 18d der Wasseraufbereitungsvorrichtung einer Filtereinheit 10d der Wasseraufbereitungsvorrichtung strömungstechnisch vorgeschaltet ist. Im vorliegenden Fall weist die Wasseraufbereitungsvorrichtung anstelle eines Adsorptionsgehäuses eine flexible Adsorptionsummantelung 96d auf. Die Adsorptionsummantelung 96d ist insbesondere als ein schlauchförmiger Sack ausgebildet. Die Adsorptionsummantelung 96d ist aus einem Stoff gebildet, wie beispielsweise einem Vlies. Die Adsorptionseinheit 18d der Wasseraufbereitungsvorrichtung ist innerhalb der Adsorptionsummantelung 96d angeordnet. Ferner umgreift im vorliegenden Fall die Adsorptionsummantelung 96d ein Filtergehäuse 32d der Wasseraufbereitungsvorrichtung. Das Filtergehäuse 32d ist im vorliegenden Fall senkrecht zu einer axialen Richtung 44d wasserdurchlässig. Das Filtergehäuse 32d dient als Abstandshalter zwischen der Filtereinheit 10d und der Adsorptionseinheit 18d. Die Filtereinheit 10d weist eine Gruppe 28d von Filterelementen 12d auf. Die Filterelemente 12d sind gerade. Im vorliegenden Fall weist die Wasseraufbereitungsvorrichtung zwei Halteelemente 20d, 98d für Endabschnitte 14d, 16d der Filterelemente 12d auf.

## Patentansprüche

1. Wasseraufbereitungsvorrichtung, welche zu einer Entfernung von Mikroschadstoffen, insbesondere Arzneimitteln, aus Wasser vorgesehen ist, mit einer Filtereinheit (10a - 10c), welche in einem Betriebszustand zu einer Filterung des Wassers vorgesehen ist und welche ein röhrenförmiges Filterelement (12a - 12c) mit zwei Endabschnitten (14a - 14c, 16a - 16c) aufweist, und mit einer Adsorptionseinheit (18a - 18c), welche die Mikroschadstoffe in einem Betriebszustand zumindest teilweise adsorbiert, wobei die Endabschnitte (14a - 14c, 16a - 16c) in einem montierten Zustand einen Innenwinkel von 0° bis 90° einschließen, wobei das Filterelement (12a - 12c) im montierten Zustand im Wesentlichen u-förmig gebogen ist, wobei die Filtereinheit (10a; 10b) zumindest ein weiteres Filterelement (22a; 22b) aufweist, welches im Wesentlichen äquivalent zu dem Filterelement (12a; 12b) ausgebildet ist **dadurch gekennzeichnet, dass** Flächennormalen der Haupterstreckungsebene (24a) des Filterelements (12a; 12b) und Flächennormalen der Haupterstreckungsebene (26a) des weiteren Filterelements (22a; 22b) einen Winkel von zumindest 20° und höchstens 160° einschließen, dass das weitere Filterelement (22a;22b) das Filterelement (12a; 12b) zumindest teilweise umgreift, dass die Filtereinheit (10a; 10b) eine Gruppe (28a; 28b) von Filterelementen (12a; 12b) und eine weitere Gruppe (30a; 30b) von weiteren Filterelementen (22a; 22b) aufweist, wobei die Gruppe von Filterelementen zumindest ein zusätzliches Filterelement aufweist, welches im Wesentlichen äquivalent zu dem Filterelement (12a; 12b) ausgebildet ist, wobei die weitere Gruppe von weiteren Filterelementen (22a; 22b) zusätzlich mindestens ein weiteres Filterelement aufweist, welches im Wesentlichen äquivalent zu dem weiteren Filterelement ausgebildet ist, wobei die Filterelemente der einen Gruppe mittels eines Netzes gebündelt sind und wobei die weiteren Filterelemente (22a; 22b) der weiteren Gruppe (30a; 30b) mittels eines weiteren Netzes gebündelt sind,
dass das Filterelement (12a; 12b) im montierten Zustand eine Haupterstreckungsebene (24a) aufweist und dass das weitere Filterelement (22a; 22b) im montierten Zustand eine weitere Haupterstreckungsebene (26a) aufweist, welche verschieden von der Haupterstreckungsebene (24a) des Filterelements (12a; 12b) ist, wobei die Haupterstreckungsebene (24a) des Filterelements (12a; 12b) und die weitere Haupterstreckungsebene (26a) des weiteren Filterelements (22a; 22b) zueinander winklig angeordnet sind.

2. Wasseraufbereitungsvorrichtung nach Anspruch 1, **gekennzeichnet durch** ein Halteelement (20a - 20d), welches die Endabschnitte (14a - 14d, 16a - 16d) im montierten Zustand fest zueinander anordnet.

3. Wasseraufbereitungsvorrichtung nach einem der vorhergehenden Ansprüche, **dadurch gekennzeichnet, dass** die Filtereinheit (10c) im Wesentlichen rohrförmig ausgebildet ist.

4. Wasseraufbereitungsvorrichtung nach einem der vorhergehenden Ansprüche, **dadurch gekennzeichnet, dass** die Adsorptionseinheit (18d) im Wesentlichen rohrförmig ausgebildet ist.

5. Wasseraufbereitungsvorrichtung nach einem der vorhergehenden Ansprüche, **gekennzeichnet durch** ein Filtergehäuse (32a - 32d), in welchem die Filtereinheit (10a - 10d) zumindest teilweise angeordnet ist.

6. Wasseraufbereitungsvorrichtung nach einem der vorhergehenden Ansprüche, **gekennzeichnet durch** ein Adsorptionsgehäuse (34a - 34c), in welchem die Adsorptionseinheit (18a - 18c) zumindest teilweise angeordnet ist.

7. Wasseraufbereitungsvorrichtung nach den Ansprüchen 5 und 6,
**dadurch gekennzeichnet, dass** das Filtergehäuse (32a - 32c) dem Adsorptionsgehäuse (34a - 34c) strömungstechnisch vorgeschaltet ist.

8. Wasseraufbereitungsvorrichtung nach einem der Ansprüche 5 bis 7, **gekennzeichnet durch** eine Verbindungseinheit (36a - 36c), welche das Adsorptionsgehäuse (34a - 34c) und das Filtergehäuse (32a - 32c) im montierten Zustand miteinander verbindet.

9. Wasseraufbereitungsvorrichtung nach einem der Ansprüche 5 bis 8, **gekennzeichnet durch** zumindest eine Siebeinheit (38a - 38c), welche das Filtergehäuse (32a - 32c) und das Adsorptionsgehäuse (34a - 34c) voneinander trennt und das Adsorptionsgehäuse (34a - 34c) von wenigstens einer Seite zumindest teilweise verschließt.

10. Wasseraufbereitungsvorrichtung nach einem der Ansprüche 5 bis 9, **gekennzeichnet durch** eine Kartusche (40a - 40d), in welcher im montierten Zustand das Adsorptionsgehäuse (34a - 34d) und das Filtergehäuse (32a - 32d) angeordnet sind und welche Öffnungen (42a - 42d) aufweist, die in axialer Richtung (44a - 44d) betrachtet in Umfangsrichtung (46a - 46d) zueinander versetzt angeordnet sind.

## Claims

1. Water processing device which is provided for removing micro-pollutants, in particular medicaments, from water, said device comprising a filter unit (10a-10c) which is provided for filtering the water when in an operating state and which comprises a tubular filter element (12a-12c) with two end portions (14a-14c, 16a-16c), and comprising an adsorption unit (18a-18c) which at least partially adsorbs the micro-pollutants when in an operating state, wherein the end portions (14a-14c, 16a-16c) enclose an inner angle of from 0° to 90° when in an assembled state, wherein the filter element (12a-12c) is bent substantially in a U-shape in the assembled state, wherein the filter unit (10a-10c) comprises at least one further filter element (22a; 22b) which is formed substantially equivalently to the filter element (12a; 12b), **characterized in that** surface normals of the plane of main extent (24a) of the filter element (12a; 12b) and surface normals of the plane of main extent (26a) of the further filter element (22a; 22b) preferably enclose an angle of at least 20° and of at most 160°, and **in that** the further filter element (22a; 22b) surrounds the filter element (12a; 12b) at least in part, and **in that** the filter unit (10a; 10b) comprises a group (28a; 28b) of filter elements (12a; 12b) and a further group (30a; 30b) of further filter elements (22a; 22b), wherein the group of filter elements comprises at least one additional filter element which is formed substantially equivalently to the filter element (12a; 12b), wherein the further group of further filter elements (22a; 22b) additionally comprises at least one further filter element which is formed substantially equivalently to the further filter element, wherein the filter elements of the one group are preferably bundled by means of a mesh and wherein the further filter elements (22a; 22b) of the further group (30a; 30b) are bundled by means of a further mesh,
and **in that** the filter element (12a; 12b) in the assembled state has a plane of main extent (24a), and **in that** the further filter element (22a; 22b) in the assembled state has a further plane of main extent (26a), which is different from the plane of main extent (24a) of the filter element (12a; 12b), wherein the plane of main extent (24a) of the filter element (12a; 12b) and the further plane of main extent (26a) of the further filter element (22a; 22b) are arranged at an angle to one another.

2. Water processing device according to claim 1, **characterized by** a holding element (20a-20d), which arranges the end portions (14a-14d, 16a-16d) fixedly relative to one another when in the assembled state.

3. Water processing device in accordance with any one of the preceding claims, **characterized in that** the filter unit (10c) is substantially tubular.

4. Water processing device in accordance with any one of the preceding claims, **characterized in that** the adsorption unit (18d) is substantially tubular.

5. Water processing device in accordance with any one of the preceding claims, **characterized by** a filter housing (32a-32d), in which the filter unit (10a-10d) is arranged at least in part.

6. Water processing device in accordance with any one of the preceding claims, **characterized by** an an adsorption housing (34a-34c) in which the adsorption unit (18a-18c) is arranged at least in part.

7. Water processing device in accordance with claims 5 and 6, **characterized in that** the filter housing (32a-32c) is fluidly arranged upstream of the adsorption housing (34a-34c).

8. Water processing device in accordance with any one of claims 5 to 7, **characterized by** a connection unit (36a-36c) which connects the adsorption housing (34a-34c) and the filter housing (32a-32c) to one another in the assembled state.

9. Water processing device in accordance with any one of claims 5 to 8, **characterized by** at least one screen unit (38a-38c) which separates the filter housing (32a-32c) and the adsorption housing (34a-34c) from one another and closes the adsorption housing (34a-34c) from at least one side at least in part.

10. Water processing device in accordance with any one of claims 5 to 9, **characterized by** a cartridge (40a-40d) in which, in the assembled state, the adsorption housing (34a-34d) and the filter housing (32a-32d) are arranged, and which comprises openings (42a-42d) which are arranged offset relative to one another in the peripheral direction (46a-46d), as considered in the axial direction (44a-44d).

## Revendications

1. Dispositif de traitement de l'eau, qui est prévu pour une élimination des micropolluants, en particulier des produits pharmaceutiques, de l'eau, avec une unité de filtre (10a - 10c) qui est prévue dans un état de fonctionnement pour une filtration de l'eau et qui présente un élément de filtre en forme de tube (12a - 12c) avec deux sections d'extrémité (14a - 14c, 16a - 16c), et avec une unité d'adsorption (18a - 18c) qui adsorbe au moins en partie les micropolluants dans un état de fonctionnement, où les sections d'extrémité (14a - 14c, 16a - 16c) dans un état monté forment un angle interne de 0° à 90°, où l'élément de filtre (12a - 12c) à l'état monté est courbé sensiblement en forme de U, où l'unité de filtre (10a; 10b) présente au moins un autre élément de filtre (22a; 22b) qui est formé de manière sensiblement équivalente à l'élément de filtre (12a; 12b) **caractérisé en ce que** les normales à la surface du plan d'extension principale (24a) de l'élément de filtre (12a; 12b) et les normales à la surface du plan d'extension principale (26a) de l'autre élément de filtre (22a; 22b) forment un angle d'au moins 20° et d'au plus 160°, **en ce que** l'autre élément de filtre (22a; 22b) entoure au moins en partie l'élément de filtre (12a; 12b), **en ce que** l'unité de filtre (10a; 10b) présente un groupe (28a; 28b) d'éléments de filtre (12a; 12b) et un autre groupe (30a; 30b) d'autres éléments de filtre (22a; 22b), où le groupe d'éléments de filtre présente au moins un élément de filtre supplémentaire qui est formé de manière sensiblement équivalente à l'élément de filtre (12a; 12b), où l'autre groupe d'autres éléments de filtre (22a; 22b) présente au moins un autre élément de filtre qui est formé de manière sensiblement équivalente à l'autre élément de filtre, où les éléments de filtre d'un groupe sont regroupés au moyen d'un réseau et où les autres éléments de filtre (22a; 22b) de l'autre groupe (30a; 30b) sont regroupés au moyen d'un autre réseau, **en ce que** l'élément de filtre (12a; 12b) présente à l'état monté un plan d'extension principale (24a) et **en ce que** l'autre élément de filtre (22a; 22b) présente à l'état monté un autre plan d'extension principale (26a) qui est différent du plan d'extension principale (24a) de l'élément de filtre (12a; 12b), où le plan d'extension principale (24a) de l'élément de filtre (12a; 12b) et l'autre plan d'extension principale (26a) de l'autre élément de filtre (22a; 22b) sont disposés sous un angle l'un par rapport à l'autre.

2. Dispositif de traitement de l'eau selon la revendication 1, **caractérisé par** un élément de maintien (20a -20d) qui dispose les sections d'extrémité (14a - 14d, 16a - 16d) solidement entre elles à l'état monté.

3. Dispositif de traitement de l'eau selon l'une des revendications précédentes, **caractérisé en ce que** l'unité de filtre (10c) est formée de manière sensiblement tubulaire.

4. Dispositif de traitement de l'eau selon l'une des revendications précédentes, **caractérisé en ce que** l'unité d'adsorption (18d) est formée de manière sensiblement tubulaire.

5. Dispositif de traitement de l'eau selon l'une des revendications précédentes, **caractérisé par** un boîtier de filtre (32a -32d) dans lequel l'unité de filtre (10a - 10d) est disposée au moins en partie.

6. Dispositif de traitement de l'eau selon l'une des revendications précédentes, **caractérisé par** un boîtier d'adsorption (34a - 34c) dans lequel l'unité d'adsorption (18a - 18c) est disposée au moins en partie.

7. Dispositif de traitement de l'eau selon les revendications 5 et 6, **caractérisé en ce que** le boîtier de filtre (32a - 32c) est branché du point de vue de l'écoulement en amont du boîtier d'adsorption (34a - 34c).

8. Dispositif de traitement de l'eau selon l'une des revendications 5 à 7, **caractérisé par** une unité de liaison (36a - 36c) qui relie le boîtier d'adsorption (34a - 34c) et le boîtier de filtre (32a - 32c) l'un à l'autre à l'état monté.

9. Dispositif de traitement de l'eau selon l'une des revendications 5 à 8, **caractérisé par** au moins une unité de tamis (38a - 38c) qui sépare le boîtier de filtre (32a - 32c) et le boîtier d'adsorption (34a - 34c) l'un de l'autre et ferme au moins en partie le boîtier d'adsorption (34a - 34c) sur au moins un côté.

10. Dispositif de traitement de l'eau selon l'une des revendications 5 à 9, **caractérisé par** une cartouche (40a - 40d) dans laquelle sont disposés à l'état monté le boîtier d'adsorption (34a - 34d) et le boîtier de filtre (32a -32d) et qui présente des ouvertures (42a - 42d) qui, vues dans la direction axiale (44a - 44d), sont disposées décalées les unes par rapport aux autres dans la direction de la circonférence (46a - 46d).
